Europäisches Patentamt

(19) European Patent Office

Office européen des brevets

(11) **EP 0 724 208 A1**

## (12) EUROPEAN PATENT APPLICATION

(43) Date of publication:
31.07.1996 Bulletin 1996/31

(51) Int. Cl.<sup>6</sup>: **G06F 1/26**

(21) Application number: **95410004.6**

(22) Date of filing: **24.01.1995**

(84) Designated Contracting States:
DE FR GB

(71) Applicant: **Hewlett-Packard Company**
**Palo Alto, California 94304 (US)**

(72) Inventors:
• **Moiroux, Jean-Paul**
**F-38000 Grenoble (FR)**

• **Simon, Jean-Jacques**
**F-38320 Bresson (FR)**

(74) Representative: **Squibbs, Robert Francis et al**
**Intellectual Property Section,**
**Legal Department,**
**Hewlett-Packard France,**
**Etablissements de Grenoble**
**F-38053 Grenoble Cédex 9 (FR)**

(54) **Control of power provisioning system in a computer**

(57)     A computer is provided with a power provisioning system for connection to an external power source (12) and comprising a main power supply (11), a standby power supply (14), and control circuitry (16) that selectively places the system in an ON state in which the main power supply (11) is energised from the external power source (12) and supplies power to main circuitry (C) of the computer, and a STANDBY state in which the standby power supply (14) is energised from the external power source (12) but the main power supply (11) and the main circuitry (C) are de-energised. The computer has an expansion bus system (22) having bus lines including first power supply lines that are energised from the main power supply (11), and expansion-card slots (29) for receiving expansion cards (28). To enable external events detectable by the expansion cards (28) to be used to transition the power provisioning system from its STANDBY to its ON state, a second bus system (50) is also provided having bus lines including second power supply lines (40, 41) connected to the standby power supply (14) and a trigger signal line (42) connected to the control circuitry (16) of the power provisioning system. This second bus system has connectors (45) for connecting its bus lines to the expansion cards (28) to supply power from the standby power supply (14) to watch circuitry (27) provided on the cards and to feed trigger signals generated by the watch circuitry (27) to the control circuitry (16). The watch circuitry (27) generates a trigger signal when it detects an external event indicating that the main circuitry (C) of the computer should be made active, and this trigger signal is used to cause the control circuitry (16) to transition the power provisioning system from its STANDBY state to its ON state.

FIG. 1

## Description

### Technical Field

The present invention relates to the control of a power provisioning system in a computer, such as a desktop computer, provided with an expansion bus sytem for receiving expansion cards.

### Background Art

It has long been the practice in portable computers intended to be operated off a battery at least part of the time, to provide power management systems. Such systems monitor and control the consumption of power by the operational circuits and devices of the computer. Generally, power management involves cutting off power to subsystems that have not been used for some time in order to reduce the overall level of power consumption, and shutting down all subsystems except for critical memory and real time clock functions upon the battery charge state falling below a danger threshold.

One such power management system is described in patent specification GB 2,235,797 A in the name of Apple Computer Inc.

Recently, power management systems have been introduced into desktop computers with a view to reducing the overall power consumption levels.

Power management systems concentrate in reducing the consumption of power howsoever provided. The present invention, in contrast, is concerned with controlling the source from which power is provided to the operating circuits and devices of a computer.

It has been known for some time to provide an internal power source, such as a battery, in desktop computers in order to maintain power to key components such as the real time clock normally provided in such computers. When the computer is switched on and powered from an external power source, the supply of power to these key components is automatically effected from the external supply. More recently, a small standby supply has been provided in some computers, this supply being intended to be energised from an external power source like the main supply of the computer but with the difference that the standby supply is always energised when the power lead is plugged into the external supply, regardless of the on/off state of what is presented to the user as the on/off switch of the computer. This standby supply serves to conserve even further the drain on the internal power source by supplying the real time clock for as long as the power lead is plugged into the external power source. In fact, it is also known to use this standby supply to power an electronic switch that controls the supply of power from the external power source to the main supply, this arrangement thereby avoiding the need to have the on/off switch operated by the user directly switch the external power source.

The present invention is concerned with a power provisioning system that is capable of responding to various external inputs and, in particular, to external events detected by circuitry provided on expansion cards.

### Summary of the Invention

According to one aspect of the present invention, there is provided a computer comprising:

(a) - main circuitry,

(b) - an expansion bus system having bus lines including first power supply lines, and an expansion-card slot for receiving an expansion card,

(c) - a power provisioning system connectable to an external power source and comprising a main power supply, a standby power supply, and control means which with the power provisioning system connected to the external power source, causes the system to reside selectively in a first state in which the main power supply is energised from the external power source and supplies power to the main circuitry and the first power supply lines, and a second state in which the standby power supply is energised from the external power source but the main power supply is inoperative and the main circuitry and first power supply lines are de-energised, and

(d) - a second bus system having bus lines including second power supply lines connected to the standby power supply and a trigger signal line connected to the control means of the power provisioning system, and connector means for connecting the bus lines of the second bus system to the expansion card to supply power from the standby power supply to watch circuitry provided on the card and to feed trigger signals generated by the watch circuitry to the control means,

the control means being responsive to the receipt of a said trigger signal over the trigger signal line to transition the power provisioning system from its second to its first state.

This arrangement permits watch circuitry to be provided on expansion cards, such as LAN and fax cards, for causing the computer to switch over to its main power supply upon the detection of an external event to which the computer is capable of responding as a consequence of the added functionality provided by the card concerned.

Since generally the expansion bus system, including the expansion slot, will conform to an industry standard (such as ISA, EISA or PCI), the connector means of the second bus system will normally be physically distinct from the expansion card slot of the expansion bus. Furthermore, since in practice there will generally be several expansion card slots, the connector means of the second bus system will normally comprise a plurality of separate connectors each for connecting to a respective one of the expansion cards; in this case, a single trigger signal line preferably serves to carry trigger signals from all the expansion cards present (although the provision of respective trigger signal lines for each card would also be possible).

In addition to the power source control provided by the power provisioning system, the power consumption of the main circuitry may be managed by power management means such that, when the main circuitry is energised, this circuitry is selectively placed in an active state in which it is fully energised and a sleep state in which it is only partially energised. Advantageously in this case, the expansion card includes wake-up circuitry for generating a wake-up signal in response to predetermined events, and the second bus system includes a wake-up signal line for passing the wake-up signal to the power management means the power management means being responsive to receipt of the wake-up signal to place the main circuitry in its active state. To speed detection of the source of the wake-up signal, plural wake-up lines can be provided, each associated with one (or more) particular expansion cards.

Preferably, the control means includes memory means (such as a flipflop) having set and reset states, and means responsive to the state of the memory means for placing the power provisioning system:

- in its first state when the memory means is in its set state, and
- in its second state when the memory means is in its reset state;

the memory means having a set input for setting it in its set state and said trigger signals supplied to the control means being applied to the set input of the memory means.

Advantageously, the power provisioning system further comprises an internal power source, the system having a third state in which it automatically resides when the external power source is disconnected and in which the internal power source powers the memory means to maintain it in the state in which it resided immediately prior to disconnection of the external supply. The control means can then be arranged, upon the external power source being reconnected to the power provisioning system, to place the power provisioning system in that one of its first and second state corresponding to the state of the memory means; in other words, the power provisioning system is restored to the state it was in immediately prior to disconnection.

The triggering of the control means to switch the power provisioning system from its second to its first state is preferbly also possible by user-operable means. Thus, the memory means may be provided with a toggling input successive inputs to which cause the memory means to toggle between its two states; a user-operable switch arrangement can then be provided for generating a toggle signal at each operation, the toggle signal being fed to the toggling input of the memory means such that successive operations of the switch serve to toggle the state of the memory means thereby changing the power provisioning system between its two said states. Advantageously, a second user-operable switch is also provided, the operation of which is arranged to feed a signal to the set input of the memory means whereby to enable a user to place the power provisioning system with certainty in its first state.

For transitioning the power provisioning system from its first state to its second state, the memory means is preferably provided with a reset input for setting it in its reset state. The microprocessor of the computer is then arranged to produce a soft-off signal under program control, and this signal is fed to the reset input of the memory means to place it in its reset state thereby causing the power provisioning system to reside in its second state.

According to another aspect of the present invention, there is provided an expansion card for a computer, the expansion card having:

(a) - first connection means by which the expansion card can be engaged in an expansion slot of the computer,
(b) - a first set of power supply lines connected to the first connection means so as to be energised from the computer when the card is engaged in the expansion slot,
(c) - second connection means,
(d) - watch circuitry for generating a trigger signal on detecting an external trigger event indicating that main circuitry of the computer should be made active,
(e) - a trigger-signal line for passing the trigger signal from the watch circuitry to the second connection means, and
(f) - a second set of power supply lines connected to the watch circuitry and to the second connection means,

the second connection means being releasably connectable to complementary connection means of the computer in order to supply power to the watch circuitry through the second set of supply lines, and to feed the trigger signal to the computer.

**Brief Description of the Drawings**

A desktop computer embodying the invention will now be particularly described, by way of non-limiting example, with reference to the accompanying diagrammatic drawings in which:

**Figure 1**   is a diagram of the computer showing a power provisioning system for controlling the source of power supplied to different zones of the computer; and
**Figure 2**   is a state transition diagram showing the operating main states of the Figure 1 power provisioning system.

**Best Mode for Carrying out the Invention**

General Arrangement

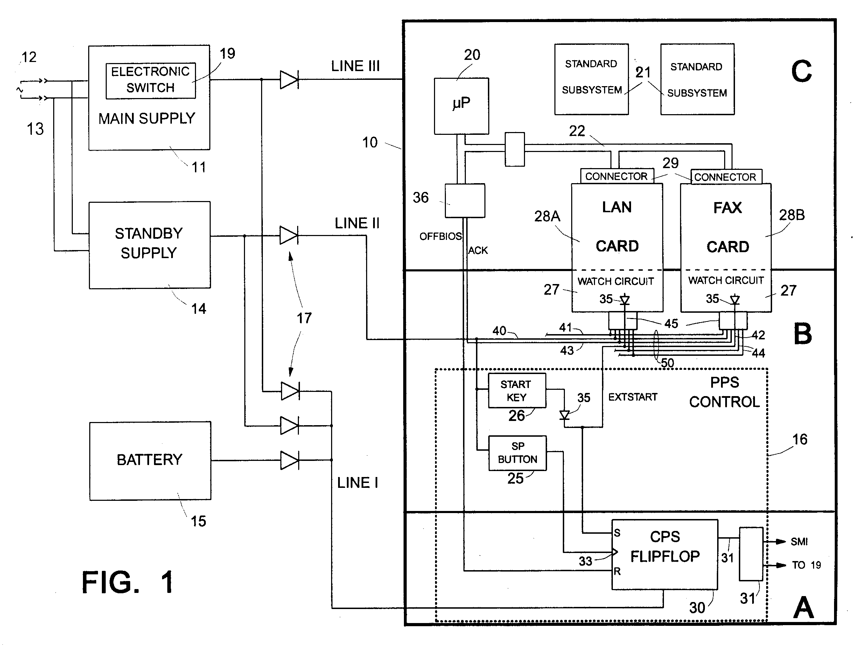

Figure 1 shows in highly diagrammatic form a desktop computer, the right-hand side of Figure 1 showing the electronic/electrical systems of the computer represented generally by box 10, whilst the left-hand side of Figure 1 shows the three possible sources of supply-line voltage for powering the electronic/electrical systems 10. These three possible sources are:

- a main power-supply circuit 11 intended to be energised from an external power source is (here, the a.c. mains supply ) through an interruptable connection 13, such as a plug and socket;
- a standby power supply circuit 14, of lower power rating than the main supply circuit 11, also intended to be energised from the external power source 12 through the interruptable connection 13; and
- an internal power source 15 (here shown as a battery but possibly also a Goldcap - a large capacitor)

The main supply circuit 11 includes an electronic switch 19 that can be controlled to cut off the output of the supply circuit thereby rendering it inoperative to supply power to the system 10.

The main supply circuit 11, standby supply circuit 14, and battery 15 are all part of a power provisioning system of the computer, this system also including control circuitry (shown within the dotted box 16 and labelled "PPS Control" in Figure 1) and an arrangement of diodes 17 through which the outputs of the supply circuits 11, 14 and of the battery 15 are connected to supply lines I, II, III. The overall arrangement is such that:

- when the external power source 12 is disconnected (for example, by operation of the interruptable connection 13), line I is powered from battery 15, but lines II, III are de-energised;
- when the external power source 12 is connected but the main supply circuit 11 is rendered inoperative by means of the electronic switch 19, lines I and II are energised from the standby supply circuit 14 whilst line III is de-energised; and
- when the external power source 12 is connected and the main supply circuit 11 operative, lines I and III are energised from the latter and line II is energised from the standby supply circuit 14.

The electronic/electrical systems 10 of the computer are divided into three zones A, B, C with each zone being powered over a corresponding one of the supply lines I, II, III (each line I, II, III may, in fact, be a set of lines depending on whether multiple supply voltages are required for powering the elements of a particular zone - however, for simplicity, the lines I, II, III will hereinafter be referred to as if they were single lines).

Zone A, supplied by line I, contains elements that need to be kept energised even when the external power source 12 is disconnected.

Zone B contains elements which provide standby functionality, watching and waiting for some trigger event indicating that the main elements of the computer should be powered up. Elements in zone B are powered via line II, being powered from the standby supply circuit 14 when the external power source 12 is connected but the main supply circuit 11 is inoperative.

Zone C contains the main elements of the computer such as a microprocessor 20, standard sub-systems 21 (such as RAM, ROM, disc drives), an expansion bus 22, etc. Effective operation of the computer requires energisation of the zone C elements, this being effected over line III when the main supply circuit 11 is rendered operative.

Operating States

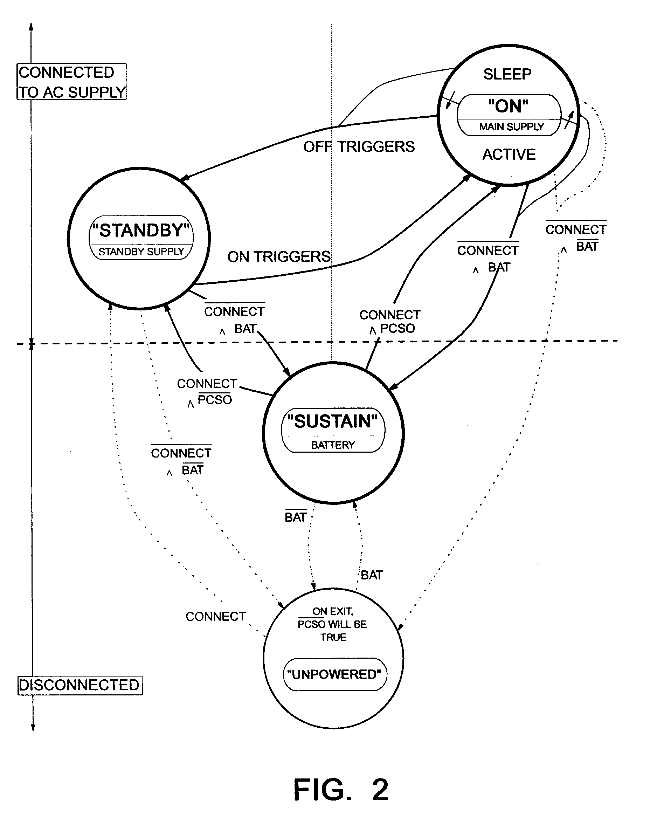

The power provisioning system can be considered as having four main operating states as depicted in the state transition diagram of Figure 2, these state being:

UNPOWERED- This is the state in which the system resides when the external power source 12 is disconnected and there is no internal power source 15 or the latter is fully discharged. In this state, none of the lines I, II, III is energised

SUSTAIN - The system resides in this state when the external power source 12 is disconnected but there is an operative internal power source 15. In this state, line I is energised from the source 15 (battery) thereby energising zone A.

STANDBY - This is the state in which the system resides when the external power source 12 is connected but the main power supply circuit is inoperative. In this state, lines I, II are energised from the standby supply circuit 14 thereby energising zones A and B.

ON - The system resides in this state when the external power source 12 is connected and the main supply 11 is operative. In this state, all three lines I, II, III are energised thereby energising all three zones A, B, C.

When the power provisioning system is in its ON state, the computer may operate a power management process in which certain components of the computer are powered down if not used for a predetermined period, these components being subsequently powered up again as soon as required. This reduced power mode is termed a 'sleep' mode as opposed to the normal 'active' mode of operation of the computer. The transition between these modes is controlled by the microprocessor 20 under program control, the microprocessor 20 remaining powered in both modes. This power management process effected under program control is of a different nature to the functionality provided by the power provisioning system where the source of power is being changed to meet current circumstances.

Transition between the states of the Figure 2 state diagram depends on:

(i) - connection (CONNECT) and disconnection ($\overline{\text{CONNECT}}$) events, that is, connection and disconnection of the external power source 12;
(ii) - battery status (good battery status being represented by BAT and a discharged or absent battery by $\overline{\text{BAT}}$);
(iii) - 'on' and 'off' triggers for transitioning between the STANDBY and ON states when the power source 12 is connected;
(iv) - the most recent connected state (STANDBY or ON) at the time the power source 12 is disconnected (a previous connected state of ON is represented by PCSO whereas a previous connected state of STANDBY is represented by $\overline{\text{PCSO}}$).

Starting with the STANDBY state, if an On Trigger is received, the power provisioning system will transit to its ON state and similarly, if an Off Trigger is received when the system is in its ON state it will transit back to its STANDBY state.

If the battery 15 is good (BAT), disconnection of the external power source 12 ($\overline{\text{CONNECT}}$), will move the system from its current connected state (ON or STANDBY) to the SUSTAIN state. On reconnection (CONNECT), the system will move from the SUSTAIN state to the STANDBY or ON state depending on whether the previous connected state corresponds to PCSO or $\overline{\text{PCSO}}$.

If the battery 15 is discharged ($\overline{\text{BAT}}$) when a disconnection event occurs ($\overline{\text{CONNECT}}$), the system will move to the UNPOWERED state. On reconnection, in practise it is not possible to restore the system to its previous connected state because the latter cannot easily be memorised in the absense of any power whilst the system was in its UNPOWERED state; accordingly, on reconnection, the system is arranged to default to the STANDBY state. The same is true if the battery 15 is replaced prior to reconnection, the system moving first from the UNPOWERED state to the SUSTAIN state and then to the STANDBY state.

Considering next the form of the On and Off Triggers, these are as follow:

On Triggers:

(i) user operation of a status panel button 25 powered from line II;
(ii) user operation of a start key 26 also powered from line II;
(iii) generation of an external start signal EXTSTART by watch circuits 27 provided on expansion cards 28

Off Triggers:

(i) operation of the status panel button 25
(ii) generation under program control of a signal OFFBIOS.

The provision of these triggers will be described more fully below but first the manner in which the PPS control 16 operates to implement the Figure 2 state diagram will be outlined. In fact, the PPS control only has to concern itself with transitions to and between the connected states (STANDBY and ON) since transition to and between the disconnected states is substantially automatic given the Figure 1 architecture.

PPS Control

The PPS control 16 has three main functions, these being to set up the power provisioning system to provide an output corresponding to its current connected state, to transition the system between its connected states, and to remember the previous connected state upon disconnection of the external power source.

All three functions can conveniently he implemented around a single flipflop 30 whose 'set' and 'reset' states respectively represent the ON and STANDBY states. When flipflop 30 is in its set state it produces a logical '1' (corresponding to PCSO) on output line 31 and this is processed by conditioning circuitry 32 to operate the electronic switch 19 so as to render the main power supply circuit 11 operative; when the flipflop 30 is in its reset state, the output line 31 is at logical '0' (corresponding to $\overline{\text{PCSO}}$) and the switch 19 is set to render the main supply inoperative.

The flipflop 30 has a set input S, a reset input R and a clocking input 33. The clocking input serves to toggle the state of the flipflop at each input whilst inputs to the set and the reset inputs respectively set the flipflop 30 in its set and reset states.

The status panel button 25 is connected to the clocking input 33 and thus each operation of this button whilst the external power source is connected serves to change the current state of the power provisioning system to the other of the two connected states STANDBY and ON.

The start key 26 and a line carrying EXTSTART signals are connected to the set input of flipflop 30 to cause the power provisioning system to move into its ON state from its STANDBY state. The start key 26 and the EXTSTART signal sources on the cards 28 are isolated one from another by isolating diodes 35, the diodes 35 associated with the EXTSTART signal sources being provided on the corresponding cards thereby enabling a single line to be used to carry the EXTSTART signal from the cards.

The OFFBIOS signal is fed to the reset input of flipflop 30 to cause the power provisioning system to move into its STANDBY state from its ON state.

The flipflop 30 is powered from line 30 and therefore, if the battery 15 is good, flipflop 30 will retain its state on disconnection of the external power source 12, this state corresponding to the current connected state, ON or STANDBY, at the time of disconnection. In contrast, all the On and Off triggers require the external power source 12 to be connected in order to be generated; as a result, the state of flipflop 30 will not be changed whilst the system is in its SUSTAIN state.

Upon re-connection of the external power source 12, the power provisioning system will be placed in its STANDBY or ON state depending on the current state of flipflop 30 and thus upon the system state immediately prior to the preceding disconnection of the external power supply 12.

The provision of the On and Off triggers will now be considered in more detail.

Status panel Button

The status panel button 25 serves as the standard on/off button for the computer and is provided on a status panel that forms part of the front of the processor box of the computer. As already described, successive operation of the button 25 toggles the power provisioning system between its STANDBY and ON states when the external power source is connected.

Start Key

It is not always convenient for a user to operate the status panel button to turn the computer "on" - for example, the processor box mounting the button 25 may be stored away beneath a desktop. It is for this reason that the start key 26 is provided, this key 26 being preferably positioned on a user input device, such as a keyboard or mouse, that will always be readily accessible to the user. Thus, the start key 26 may be implemented as an additional contact set associated with the space bar of the keyboard so that pressing the space bar will result in a signal being fed to the set input of the flipflop 30 to set the power provisioning system in its ON state. A user returning to the computer thus need only press the space bar to ensure that the power provisioning system is in its ON state (assuming the external source 12 is connected); the user need not concern himself/herself with the current state of the system immediately prior to pressing the space bar since regardless of whether the system is in its ON or STANDBY state, after pressing the spacebar, the system will be in its ON state. If the power provisioning system was in fact in its ON state when the space bar is pressed, the fact that a "space" input will be processed by the microprocessor 20 will generally be irrelevant as a 'space' input is normally insufficient to cause initiation of predetermined functions in application software.

If the start key 26 is provided as a mouse, then it is preferably provided as a separate button distinct from the normal mouse buttons rather than a separate contact set operated by a normal button. One reason for this is that, if the start key is implemented as a contact set associated with a normal mouse button, operation of the relevant mouse button with the intention of establishing the power provisioning system in its ON state, could if the system was already in its ON state, initiate some unintended operating-system or application-software functionality.

It may be noted that providing the status panel button 25 on the keyboard or on a mouse to facilitate access is not an acceptable solution because this would make it far too easy for the user to inadvertently power down the computer into the STANDBY state of the power provisioning system.

OFFBIOS Signal

The Off trigger constituted by the OFFBIOS signal is a software generated trigger which, for example, is initiated by the user clicking on a displayed 'off' icon. At a hardware level, upon the microprocessor 20 acting under program control determining that the power provisioning system is to be set into its STANDBY state, it addresses an appropriate output to conditioning circuitry 36 that generates the OFFBIOS signal for passing to the reset input of the flipflop 30.

EXTSTART and Watch Circuits

Turning now to the generation of the EXTSTART On trigger, this is generated by the watch circuitry 27 provided on the expansion card 28. These cards 28, are, for example, a LAN card 28A and a fax card 28B respectively connected to a LAN and to a telephone line. Each card 28A, 28B is inserted into a standard expansion slot (connector 29) of the expansion bus 22, the latter typically being in conformity with the ISA, EISA or PCI bus standard and including a set of supply lines energised over line III. The cards 28A, 28B respectively include the normal circuitry for interfacing with a LAN and for sending and receiving faxes, this circuitry being powered from the supply lines of the expansion bus 22 via connectors 29; as a result, the normal card circuitry is only powered when the power provisioning system is in its ON state.

In contrast, the watch circuits 27 are powered over supply line 40 energised from line II and are therefore live whenever the external power source 12 is connected; in particular, the watch circuits 27 are energised from the standby supply 14 when the power provisioning system is in its STANDBY state and the normal circuitry of the cards 28A, 28B is de-energised. A ground line 41 is associated with the line 40 and is connected to the watch circuits 27.

The watch circuit 27 of the LAN card 28A monitors the traffic on the associated LAN and upon detecting a special start-up message addressed to the computer, outputs an EXTSTART signal on line 42. The watch circuit 27 of the Fax card 28B is responsive to an incoming fax to output on EXTSTART signal also on line 42. Other watch circuits on other expansion cards may also be provided.

As already noted, the EXTSTART signal sets the flipflop 30 in its 'set' state, thereby causing the power provisioning system to transit to its ON state. This results in the main computer circuitry in zone C being powered up including the rest of the circuitry on the cards 28A, 28B and the microprocessor 20. Once the main computer circuitry is powered up, it will respond to the external event (start-up message/incoming fax) that triggered the generation of the EXTSTART signal, the nature of this response being under program control. However, in all cases the microprocessor 20 is preferably arranged to generate, under BIOS control, an acknowledgement signal ACK that is fed back on line 43 to the watch circuits 27. In this manner the watch circuit that generated the EXTSTART signal will quickly know if it has successfully caused power on of the main circuitry; if no acknowledgment is received after a predetermined time, the watch circuit is in any case arranged to remove the EXTSTART signal. If this were not done, the EXTSTART signal could remain asserted, preventing power off of the computer. In one implementation, the output of each watch circuit is provided via a flipflop that is placed in a 'set' state, outputting an EXTSTART signal, upon the watch circuit detecting an external trigger event; this flipflop is subsequently reset by the ACK signal, thereby removing the EXTSTART signal.

It should be noted that whilst the watch circuit 27 and the other circuitry on each expansion card 28 are served by separate power supply lines, when the power provisioning system is in its ON state and the card is fully powered the watch circuit 27 can communicate with the other circuitry on the card and with the expansion bus signal lines (data, address and control bus lines). As a result, it is possible for the watch circuit to be initialised to a predetermined condition when the STANDBY state is entered from the ON state. This is achieved by having the circuitry 32 generate a system management interrupt SMI upon line 31 moving to logical '0', this interrupt being serviced by the microprocessor 30 in the usual manner and resulting in an initialisation routine being run to initialise the watch circuits 27 on the expansion cards 28. Of course, in order to do this, the microprocessor must remain powered up and therefore operation of the switch 19 to inhibit the main supply 11 must be delayed. This can be achieved either by introducing a simple fixed delay in circuitry 32 to delay operation of switch 19 for a fixed time after generation of the interrupt, or by having operation of switch 19 to inhibit the supply 11 controlled by the microprocessor itself, the switch 19 only be operated once the initialisation routine has been completed.

It should be noted that although the expansion bus signal lines can be used for exchanging signals with the watch circuits when the power provisioning system is in its ON state, the watch circuits must avoid placing signals on the expansion bus lines in the other states of the power provisioning system since in such states the microprocessor 20 and its associated circuitry will not be powered and could be damaged by signals on the bus 22.

The lines 40 to 43 that supply power to the watch circuits 27 and carry the EXTSTART and ACK signals together effectively constitute a bus 50 additional to the standard expansion bus 22, this additional bus 50 (herein, the "start" bus) connecting to the cards 28 through connectors 45. The start bus 50 may be implemented in a number of different ways; for example, the bus 50 may be implemented as a daisy chain jumping from one connector 45 to the next, as separate flying-lead connectors to each expansion card 28, or as a plurality of connectors provided along the same ribbon cable.

Although the start bus 50 and connectors 45 are shown as physically separate from the expansion bus 22 and connectors 29, it would be possible to integrate the two buses and connectors. However, as a practical matter, this may not be considered desirable because of the fact that the expansion bus 22 and connectors 29 will generally be standardised on ISA, EISA or PCI and it would be impractical to alter this standard part of the computer.

The expansion cards 28 may also be provided with circuitry responsive to external events to wake up the computer from its "sleep" mode as part of the power management scheme operated under the control of the microprocessor 20. This wake-up circuitry will generally be closely associated with the watch circuits as much of its functionality is similar to that of the latter. The wake-up circuitry is effective when the power provisioning system is in its ON state but the computer is in its sleep mode, to generate a system management interrupt on line 44 in response to predetermined external events, this interrupt being supplied to the microprocessor 20 and causing the latter to change the computer to its active mode. To facilitate the rapid detection of the source of the interrupt by the interrupt handler, rather than having the cards 28 share a common line 44 (through isolating diodes), a respective line 44 is preferably provided for each different wake-up interrupt, each card having appropriate jumpers to select which wake-up interrupt line 44, if any, it is to utilise.

The line or lines 44 are preferably provided as part of the start bus 50.

Variants

It will be appreciated that many variants are possible to the above-described system. For example, in relation to the main and standby power supplies 11 and 14, although these are shown as completely separate in Figure 1, they may share a common transformer primary and core. Again, with respect to the electronic switch 19 used to control the main power supply 11, this can be provided anywhere in relation to the circuitry of the power supply so long as it is effective to render the supply inoperative to energise line III.

As regards the operating states of the power provisioning system, a more complicated state machine may be implemented particularly where it is desired to build in certain security features. For example, a user may be required to have entered a pasword at the keyboard of the computer before the latter is rendered operable, either on first start up or following the user having "locked" the computer so that it does not respond to keyboard and mouse input. In this case, in order to avoid prejudicing system security, whenever the ON state is entered, the user should be required to enter the correct password before using the computer; in cases where the On trigger is user-generated, the password may be called for before the computer is booted locally, whereas if the On trigger is an EXSTART signal, the computer is preferably booted over the network to enable it to respond to the external event that caused the watch circuits to generate the EXSTART signal, the keyboard and mouse remaining inoperative until the user enters the correct password. The extra states required to implement such an arrangement are all sub-states of the macro ON state.

**Claims**

1. A computer comprising:

(a) - main circuitry,
(b) - an expansion bus system having bus lines including first power supply lines, and an expansion-card slot for receiving an expansion card,
(c) - a power provisioning system connectable to an external power source and comprising a main power supply, a standby power supply, and control means which with the power provisioning system connected to said external power source, causes the system to reside selectively in a first state in which the main power supply is energised from said external power source and supplies power to said main circuitry and said first power supply lines, and a second state in which the standby power supply is energised from said external power source but the main power supply is inoperative and said main circuitry and first power supply lines are de-energised, and

(d) - a second bus system having bus lines including second power supply lines connected to said standby power supply and a trigger signal line connected to the control means of the power provisioning system, and connector means for connecting the bus lines of the said second bus system to said expansion card to supply power from the standby power supply to watch circuitry provided on said card and to feed trigger signals generated by said watch circuitry to said control means,

said control means being responsive to the receipt of a said trigger signal over said trigger signal line to transition the power provisioning system from said second to said first state.

2. A computer system according to claim 1, including said expansion card engaged in said expansion slot, the said watch circuitry of the expansion card generating a said trigger signal on detecting external trigger events indicating that said main circuitry should be made active.

3. A computer according to claim 1 or claim 2, wherein the connector means of the second bus system are physically distinct from the said expansion card slot in which said expansion card is inserted.

4. A computer according to claim 1 or claim 2, wherein said expansion bus system comprises a plurality of expansion slots each for receiving a respective expansion card, and said connector means of the second bus system comprises a plurality of separate connectors each for connecting to a respective one of said expansion cards.

5. A computer according to claim 4, wherein a single said trigger signal line serves to carry trigger signals from all the expansion cards present in the computer.

6. A computer according to claim 1 or claim 2, having acknowledgement means for generating an acknowledgment signal upon the main circuitry being energised as a consequence of the control means receiving a said trigger signal, said second bus system including an acknowledgement line for feeding said acknowledgement signal to the watch circuitry of the expansion card.

7. A computer according to claim 6, wherein said watch circuitry is responsive to the receipt of said acknowledgement signal to remove said trigger signal from the trigger signal line.

8. A computer according to claim 1 or claim 2, wherein said main circuitry includes power management means for managing power consumption by the main circuitry, when the latter is energised, by selectively placing the main circuitry in an active state in which it is fully energised and a sleep state in which it is only partially energised; said expansion card including wake-up circuitry for generating a wake-up signal in response to predetermined events, and said second bus system including a wake-up signal line for passing said wake-up signal to said power management means, the power management means being responsive to receipt of said wake-up signal to place the main circuitry in its said active state.

9. A copmuter according to claim 8, wherein said second bus system includes a plurality of wake-up signal lines usable by different ones of said cards, the power management system being responsive to the wake-up signal line on whihc a said wake up signal is received to determine the identity of the expansion card originating that signal.

10. A computer according to claim 1 or claim 2, including user-operable means for causing said control means to transition the power provisioning system from its said first state to its said second state, and means for initialising said watch circuitry over said expansion bus following operation of said user-operable means but before the power-provisioning system is placed in its said second state.

11. A computer according to claim 1 or claim 2, wherein said control means includes memory means having set and reset states, and means responsive to the state of said memory means for placing the power provisioning system:

    - in its first state when the memory means is in its set state, and
    - in its second state when the memory means is in its reset state;

    the memory means having a set input for setting it in its set state and said trigger signals supplied to the control means being applied to said set input of the memory means.

12. A computer according to claim 11, wherein the power provisioning system further comprises an internal power source, said system having a third state in which it automatically resides when said external power source is disconnected and in which said internal power source powers said memory means to maintain it in the state in which it resided immediately prior to disconnection of said external supply, and the control means being operative, upon the external power source being reconnected to the power provisioning system, to place the power provisioning system in that one of its first and second state corresponding to the state of the memory means.

13. A computer according to claim 11, wherein said memory means has a toggling input successive inputs to which cause the memory means to toggle between its two states, said control means further comprises a user-operable switch arrangement for generating a toggle signal at each operation said toggle signal being fed to said toggling input of the memory means such that successive operations of the switch arrangement serve to toggle the state of the memory means thereby changing the power provisioning system between its two said states.

14. A computer according to claim 11, wherein the computer includes a user-operable input device and said control means further comprises a user-operable switch mounted on said user-operable input device, operation of said user-operable switch being arranged to feed a signal to the set input of the memory means whereby to enable a user to place the power provisioning system in its first state.

15. A computer according to claim 14, wherein said input device is a keyboard, said user-operable switch being in the form of a dedicated pair of switch contacts associated with the space bar of the keyboard.

16. A computer according to claim 11, wherein the memory means has a reset input for setting it in its reset state, and said main circuitry includes a microprocessor for producing a soft-off signal under program control, said soft-off signal being fed to the reset input of said memory means to place it in its reset state thereby causing the power provisioning system to reside in its second state.

17. A computer according to claim 1 or claim 2, wherein said main circuitry includes a microprocessor for producing a soft-off signal under program control, and wherein said control means comprises:

    -- a flipflop device having set and reset inputs for setting the flipflop into set and reset states respectively, and a clocking input successive inputs to which cause the flipflop to toggle between its two states, said trigger signals supplied to the control means being applied to said set input of the flipflop;
    -- means responsive to the state of said flipflop for placing the power provisioning system:

    - in its first state when the flipflop is in its set state, and
    - in its second state when the flipflop is in its reset state;

-- a first user-operable switch arrangement for generating a clocking signal at each operation, said clocking signal being fed to said clocking input of the flipflop such that successive operations of the first switch serve to toggle the state of the flipflop;

-- a second user-operable switch arrangement for feeding a signal to the set input of the flipflop; and

-- means for feeding said soft-off signal from the main circuitry to said reset input of the flipflop.

18. An expansion card for a computer, the expansion card having:

(a) - first connection means by which the expansion card can be engaged in an expansion slot of the computer,

(b) - a first set of power supply lines connected to said first connection means so as to be energised from the computer when the card is engaged in said expansion slot,

(c) - second connection means,

(d) - watch circuitry for generating a trigger signal on detecting an external trigger event indicating that main circuitry of the computer should be made active,

(e) - a trigger-signal line for passing said trigger signal from the watch circuitry to the second connection means, and

(f) - a second set of power supply lines connected to said watch circuitry and to said second connection means,

the second connection means being releasably connectable to complementary connection means of the computer in order to supply power to said watch circuitry through said second set of supply lines, and to feed said trigger signal to the computer.

FIG. 1

EP 0 724 208 A1

CONNECTED
TO AC SUPPLY

SLEEP

"ON"

MAIN SUPPLY

ACTIVE

OFF TRIGGERS

"STANDBY"

STANDBY SUPPLY

ON TRIGGERS

$\overline{CONNECT}$
$\wedge \overline{BAT}$

$\overline{CONNECT}$
$\wedge$ BAT

$\overline{CONNECT}$
$\wedge$ BAT

$\overline{CONNECT}$
$\wedge$ PCSO

$\overline{CONNECT}$
$\wedge \overline{PCSO}$

"SUSTAIN"

BATTERY

$\overline{CONNECT}$
$\wedge \overline{BAT}$

$\overline{BAT}$

BAT

CONNECT

ON EXIT,
$\overline{PCSO}$ WILL BE
TRUE

"UNPOWERED"

DISCONNECTED

FIG. 2

**European Patent Office**

**EUROPEAN SEARCH REPORT**

Application Number

EP 95 41 0004

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 508 685 (IBM) | 1-10,18 | G06F1/26 |
| Y | * figures 3-5,8,9 * <br> * column 9, line 19 - column 12, line 57 * | 1,11-17 | |
| | --- | | |
| Y | EP-A-0 567 957 (SHARP KABUSHIKI KAISHA) <br><br> * figures 8-15 * <br> * column 13, line 17 - column 22, line 48 * | 1,11,12, 17 | |
| | --- | | |
| Y | EP-A-0 230 351 (IBM) <br> * figures 1,2 * <br> * abstract * <br> * column 7, line 34 - line 54 * <br> * column 8, line 5 - line 18 * | 1,11-17 | |
| | ----- | | |

TECHNICAL FIELDS
SEARCHED (Int.Cl.6)

G06F

The present search report has been drawn up for all claims

| Place of search | Date of completion of the search | Examiner |
|---|---|---|
| THE HAGUE | 10 July 1995 | Weiss, P |